# EUROPÄISCHE PATENTSCHRIFT

(11) **EP 1 845 281 B1**
(45) Veröffentlichungstag und Bekanntmachung des Hinweises auf die Patenterteilung: **09.03.2016**
(21) Anmeldenummer: 06007575.1
(22) Anmeldetag: 11.04.2006
(51) Int. Cl.: F16F 15/02, G05D 19/02

(54) **Aktives Schwingungsisolationssystem**
Active vibration isolating system
Système actif d'isolation de vibrations

(43) Veröffentlichungstag der Anmeldung: 17.10.2007
(73) Patentinhaber: Integrated Dynamics Engineering GmbH, 65479 Raunheim (DE)
(72) Erfinder: Heiland, Peter, 65479 Raunheim (DE)
(74) Vertreter: Herden, Andreas F.

(56) Entgegenhaltungen:
- US-A- 5 811 821
- US-A- 6 021 991
- US-A1- 2002 088 678
- US-A1- 2003 047 693
- US-A1- 2003 090 645
- US-A1- 2004 164 253
- US-A1- 2005 126 849
- US-B1- 6 213 443

## Beschreibung

### Gebiet der Erfindung

Die Erfindung betrifft ein aktives Schwingungsisolationssystem, sowie ein Verfahren zur Schwingungsisolation, bei welchem strukturbedingte Schwingungen der zu isolierenden Masse, insbesondere Eigenfrequenzschwingungen bei der aktiven Regelung berücksichtigbar sind.

### Hintergrund der Erfindung

Systeme zur Schwingungsisolation sind bekannt. So zeigt beispielsweise die europäische Patentschrift EP 927830 B1 ein lithographisches Gerät, welches auf Luftlagern schwingungsisoliert gelagert ist. Derartige Schwingungsisolationssysteme werden in verschiedensten Bereichen der Technik, insbesondere im Bereich der Halbleiterfertigung und bei hochauflösenden bildgebenden Systemen wie NMR-Anlagen und Elektronenstrahlmikroskopen eingesetzt.

Mit steigender Fertigungsgenauigkeit steigen auch die Anforderungen an derartige Schwingungsisolationssysteme. Es wurden daher Schwingungsisolationssysteme entwickelt, welche neben einer mechanischen Abkopplung der zu isolierenden Masse, beispielsweise durch Luftlager, eine aktive Regelung über Aktoren umfassen. Bei derartigen Schwingungsisolationssystemen werden über Sensoren Positionsänderungen der zu isolierenden Masse, insbesondere Schwingungen, erfasst. Über Aktoren wird der Positionsänderung entgegengewirkt.

Durch elektronische Steuerungen sind derartige Schwingungsisolationssysteme sogar in der Lage, durch Störeinflüsse auftretende Positionsänderungen vorherzusehen und einer möglichen Positionsänderung im Vorfeld entgegenzuwirken.

Nachteilig an derartigen bekannten Schwingungsisolationssystemen hat sich gezeigt, dass die zu isolierende Masse als starrer Körper angesehen wird und von dem Körper ausgehende Schwingungen wie beispielsweise Eigenfrequenzschwingungen isolierter Massen bei der Regelung des Schwingungsisolationssystems nicht berücksichtigt werden können. Eine Einbeziehung derartiger Strukturschwingungen konnte mit bisherigen Regelungsmodellen nicht erreicht werden. Vielmehr hat sich gezeigt, dass der Versuch, Strukturschwingungen bei der Ansteuerung der Aktoren eines aktiven Schwingungsisolationssystems zu berücksichtigen, dazu führt, dass die Strukturschwingungen nicht reduziert werden konnten und in vielen Fällen sogar verstärkt werden.

Daher wird bei bekannten aktiven Schwingungsisolationssystemen die zu isolierende Masse üblicherweise als starrer Körper angesehen und regelungstechnisch ausgeblendet, die Schwingungen der zu isolierenden Masse selbst also bei der Berechnung von Kompensationssignalen nicht berücksichtigt. Schwingungsisolationsysteme sind aus den Dokumenten US 6,213,443 B1, US 5,811,821, US 2003/0090645 A1, US 2005/0126849 A1 und US 2003/0047693 A1 bekannt.

Das Dokument US 2004/0164253 A1 bezieht sich auf eine Technik zur Schwingungsregelung eines beweglichen Objekts in einer Präzisionsvorrichtung wie eine Halbleiterbelichtungsvorrichtung. Mittels eines piezoelektrischen Elements wird die Verformung einer Stage kompensiert.

### Aufgabe der Erfindung

Der Erfindung legt demgegenüber die Aufgabe zugrunde, ein System sowie ein Verfahren zur Schwingungsisolation bereitzustellen, bei welchem die Isolationswirkung weiter verbessert wird.

Insbesondere ist Aufgabe der Erfindung, ein Schwingungsisolationssystem bereitzustellen, bei welchem Strukturschwingungen der zu isolierenden Masse, insbesondere Eigenfrequenzschwingungen mit berücksichtigt werden können, so dass auch Schwingungen, die durch die Struktur der gelagerten Masse verursacht werden, reduziert werden können.

### Zusammenfassung der Erfindung

Die Aufgabe der Erfindung wird bereits durch ein aktives Schwingungsisolationssystem sowie durch ein Verfahren zur Schwingungsisolation nach einem der unabhängigen Ansprüche erreicht.

Bevorzugte Ausführungsformen und Weiterbildungen der Erfindung sind den jeweiligen Unteransprüchen zu entnehmen.

Danach ist ein aktives Schwingungsisolationssystem vorgesehen, welches zumindest eine zu isolierende Masse, die auf Schwingungsisolatoren, insbesondere Luftlagern, gelagert ist, umfasst.

Unter einem aktiven Schwingungsisolationssystem im Sinne der Erfindung wird jedes Schwingungsisolationssystem verstanden, bei welchem über Aktoren regelmäßigen oder unregelmäßigen Positionsänderungen der zu isolierenden Masse aktiv entgegenwirkt wird, gleich ob die dafür vorgesehenen Aktoren an der zu isolierenden Masse oder an den Lagern des Schwingungsisolationssystems angreifen. Unter einer zu isolierenden Masse wird auch eine Aufnahmeeinrichtung für Bauteile oder Baugruppen verstanden, beispielsweise ein schwingungsisolierter Tisch, auf welchem Bauteile und Baugruppen schwingungsisoliert angeordnet werden können.

Das aktive Schwingungsisolationssystem umfasst zumindest einen Sensor, um Positionsänderungen, insbesondere Schwingungen der zu isolierenden Masse zu erfassen. Der Sensor braucht nicht notwendiger Weise Bewegungen in alle Raumrichtungen zu erfassen. Je nach Anwendungszweck ist es vorgesehen, Sensoren zu verwenden, die Bewegungen in zwei, vier oder sechs Freiheitsgraden erfassen.

Über einen Aktor, welcher bei einer bevorzugten Ausführungsform der Erfindung in oder an den Lagern des Schwingungsisolationssystems angeordnet ist, wird einer Positionsänderung, insbesondere einer Schwingung der zu isolierenden Masse entgegengewirkt. Der beziehungsweise die Aktoren werden dabei von einer Regeleinrichtung angesteuert, welche die Signale der Sensoren auswertet und daraus Korrektursignale zur Ansteuerung der Aktoren errechnet.

Der oder die Sensoren zur Erfassung der Positionsänderungen der zu isolierenden Masse befinden sich dabei vorzugsweise nahe den Lagern, um nicht durch Strukturschwingungen der zu isolierenden Masse, insbesondere des Tisches eines Schwingungsisolationssystems, beeinflusst zu werden.

Die Erfinder haben herausgefunden, dass über zumindest einen weiteren Sensor, welcher vorzugsweise an der zu isolierenden Masse angeordnet ist oder Schwingungen der zu isolierenden Masse erfasst, Strukturschwingungen erfasst, mit in die Berechnungen der Regelung aufgenommen und somit berücksichtigt werden können. Der zusätzliche Sensor ist dabei bevorzugterweise an einer von den Lagern beabstandeten Stelle angeordnet.

So kann durch einen Vergleich des Sensors oder der Sensoren, welche sich in der Nähe der Lager befinden, ermittelt werden, welche Bewegungsanteile von Strukturschwingungen der zu isolierenden Masse verursacht werden.

Unter Strukturschwingungen im Sinne der Erfindung werden jegliche Schwingungs- oder Bewegungsanteile verstanden, die darauf zurück zu führen sind, dass es sich bei der isolierten Masse nicht um einen idealen starren Körper handelt.

Der weitere Sensor befindet sich dabei zumindest 10 cm und bevorzugt zumindest 15 cm von einem Lager entfernt.

Das Schwingungsisolationssystem umfasst vorzugsweise eine Aufnahme zur Lagerung eines zu isolierenden Gegenstandes, insbesondere einen Tisch. Über den zumindest einen weiteren Sensor sind Strukturschwingungen der Aufnahme beziehungsweise des Tisches erfassbar.

Alternativ oder in Kombination ist ein Sensor vorgesehen, welcher Strukturschwingungen des zu isolierenden Gegenstandes erfasst. So können Strukturschwingungen der gesamten zu isolierenden Masse berücksichtigt werden.

Gemäß der Erfindung wird über die Regeleinrichtung, welche den oder die Aktoren ansteuert, ein Kompensationssignal, welches die Strukturschwingungen der zu isolierenden Masse repräsentiert, errechnet und zu den sonstigen Kompensationssignalen der aktiven Schwingungsisolation hinzu addiert.

Je nach Komplexität des Systems und je nach Art der Information über die verschiedenen Freiheitsgrade der Schwingung kann, wie bei einer Weiterbildung der Erfindung vorgesehen, eine zusätzlich Transformation in die Berechnung mit eingehen, bei welcher noch weitere Systembedingungen, insbesondere die weiteren Kompensationssignale der aktiven Schwingungsisolation zur Steuerung der Aktoren berücksichtigt werden.

Als Sensoren werden vorzugsweise berührungsfrei arbeitende Sensoren verwendet, insbesondere kapazitive, induktive und/oder optische Sensoren.

Je nach Anwendungszweck ist auch der weitere Sensor zur Erfassung der Strukturschwingungen zur Erfassung von Positionsänderungen in zumindest zwei, vorzugsweise vier und besonders bevorzugt sechs Freiheitsgraden ausgebildet.

Die Erfassung von Strukturschwingungen wird vorzugsweise dadurch optimiert, dass der weitere Sensor von den Lagern des Schwingungsisolationssystems möglichst weit entfernt ist. Dazu ist er vorzugsweise symmetrisch von gegenüberliegenden Lagerpaaren im Wesentlichen gleich weit entfernt angeordnet.

Die Erfindung ermöglicht es, ein aktives Schwingungsisolationssystem bereitzustellen, welches bereits bei einer niedrigen Anregungsfrequenz von 5 Hz ein Dämpfung von über 3 dB, bevorzugt über 5 dB und besonders bevorzugt über 10 dB aufweist. Bei einer Anregungsfunktion von 15 Hz ist bereits eine Dämpfung von über 10 dB, bevorzugt über 20 dB und besonders bevorzugt über 25 dB möglich.

Gleichzeitig ermöglicht das erfindungsgemäße aktive Schwingungsisolationssystem die Bereitstellung von Systemen mit einer sehr hohen Tragkraft, insbesondere einer Tragkraft von über 1000 N, bevorzugt über 5000 N, besonders bevorzugt über 10000 N.

Bei einer bevorzugten Ausführungsform der Erfindung greifen Aktoren, um nicht weitere Störschwingungen einzukoppeln, berührungslos an der zu isolierenden Masse an. Dabei sind insbesondere elektrostatische oder magnetische Aktoren vorgesehen.

Weiter umfasst die Erfindung ein Verfahren zu Schwingungsisolation, wobei eine zu isolierenden Masse auf Schwingungsisolatoren gelagert wird und über zumindest einen Sensor Positionsänderungen, insbesondere Schwingungen der zu isolierenden Masse erfasst und über zumindest einen Aktor einer Positionsänderung oder Schwingung der zu isolierenden Masse entgegengewirkt wird.

Über einen weiteren Sensor werden Strukturschwingungen der zu isolierenden Masse erfasst und bei der Ansteuerung des zumindest einen Aktors berücksichtigt. Dabei ist vorzugsweise jedem Lager ein Aktor zugeordnet. Es werden nicht nur Schwingungen der Aufnahme, sondern auch Strukturschwingungen des zu isolierenden Gegenstandes, insbesondere der auf einem Schwingungsisolationssystems angeordneten Bauteile und Baugruppen erfasst.

Die Erfindung ermöglicht die Bereitstellung einer Plattform zur schwingungsisolierten Lagerung, welche mit einem System zur Schwingungsisolation ausgestattet ist. Besonders vorteilhaft an dem System ist, dass in bezug auf die Aktoren keine weitere Hardware in das System implementiert werden muss. Das System kann daher auch einfach bei bestehenden Schwingungsisolationsanlagen nachgerüstet werden.

### Kurzbeschreibung der Zeichnungen

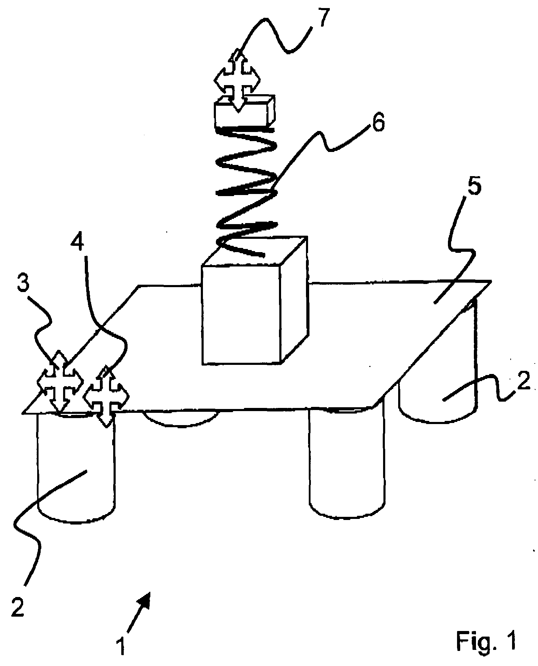

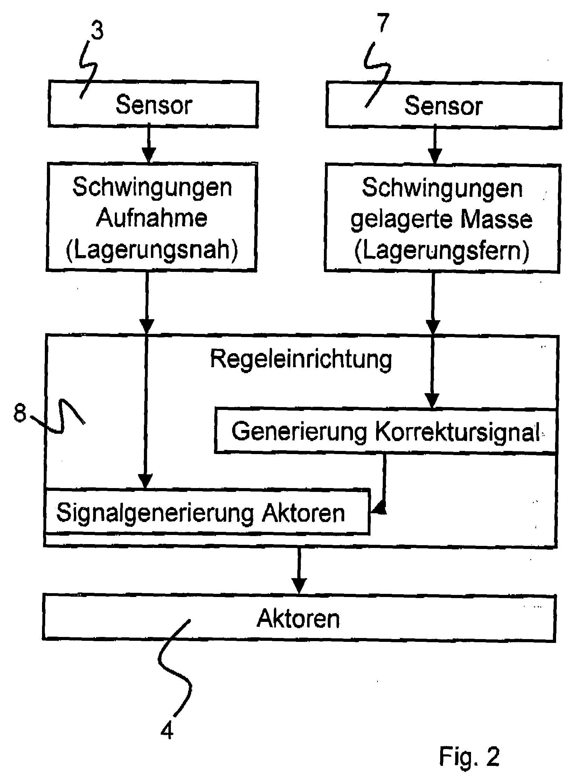

Die Erfindung soll im Folgenden an Hand der Zeichnungen Fig. 1 und Fig. 2, welche schematisch ein Ausführungsbeispiel der Erfindung zeigen, näher erläutert werden.
Fig. 1 zeigt schematisch die wesentlichen Komponenten eines erfindungsgemäßen Schwingungsisolationssystems.
Fig. 2 zeigt schematisch die wesentlichen Verfahrensschritte eines beispielhaften Ausführungsbeispiels eines Verfahrens zur Schwingungsisolation.

### Detaillierte Beschreibung der Zeichnungen

Bezug nehmend auf Fig. 1 sollen die wesentlichen Komponenten eines Schwingungsisolationssystems 1 näher erläutert werden.

Das Schwingungsisolationssystem 1 umfasst in dieser Ausführungsform vier Lager 2, welche als Luftlager ausgestaltet sind. Auf den Luftlagern 2 ist eine Platte 5 gelagert, welche der Aufnahme von zu isolierenden Bauteilen und Baugruppen dient.

Zumindest im Wesentlichen in der Nähe eines Lagers 2 ist ein Sensor 3 angeordnet, welcher Positionsänderungen, insbesondere Schwingungen der Platte 5 in zweckmäßigerweise drei Raumrichtungen erfasst. Um nicht von Eigenfrequenzschwingungen der Platte 5 oder des zu isolierenden Gegenstandes 6 beeinträchtigt zu werden, ist der Sensor 3 lagernah angeordnet. Der Sensor 2 ist mit der Regeleinrichtung (nicht dargestellt) zur Regelung der Aktoren 4 verbunden. Die Aktoren greifen an der Platte an und ermöglichen es, Schwingungen des Systems entgegenzuwirken.

Die Position des zu lagernden Gegenstandes 6, hier schematisch dargestellt als Feder-Masse-Schwinger, lässt sich im oberen Bereich des zu lagernden Gegenstandes 6 über einen weiteren Sensor 7 erfassen. Auch der weitere Sensor 7 ist mit der Regeleinrichtung (nicht dargestellt) verbunden.

In dieser Konfiguration können über den weiteren Sensor 7 Strukturschwingungen der zu isolierenden Masse erfasst werden. Dabei gehen sowohl Strukturschwingungen der Platte 5 als auch Strukturschwingungen des zu isolierenden Gegenstandes 6, welche zusammen die isolierte Masse bilden, mit ein.

Es versteht sich, dass strukturbedingte Eigenschwingungen der zu isolierenden Masse zur weiteren Erhöhung der Wirksamkeit des Systems auch an weiteren Stellen erfasst werden können, beispielsweise kann auf der Platte ein weiterer Sensor angeordnet werden (nicht dargestellt), oder es können an dem zu isolierenden Gegenstand 6 und/oder der Platte 5 mehrere Sensoren angeordnet werden, welche mit der Regeleinrichtung verbunden sind (nicht dargestellt).

Bezug nehmend auf das Flussbild gemäß Fig. 2 soll das Zusammenspiel der wesentlichen Komponenten des Schwingungsisolationssystems näher erläutert werden. Über einen Sensor 3 werden Schwingungen erfasst und an die Regeleinrichtung weiter gegeben. Da sich der Sensor 3 nahe des Lagers befindet, werden Eigenschwingungen der zu isolierenden Masse überwiegend ausgeblendet.

Über einen weiteren Sensor 7, welcher idealerweise möglichst lagerungsfern angeordnet ist, beziehungsweise lagerungsfern Positionsänderungen erfasst, werden Schwingungen, die auf strukturbedingte Schwingungen der zu isolierenden Masse, insbesondere Eigenfrequenzschwingungen rückschließen lassen, an die Regeleinrichtung 8 weitergegeben.

Aufgrund der Tatsache, dass es sich bei Eigenfrequenzschwingungen zumeist um sinusförmige Schwingungen handelt, ist der Regelaufwand meist recht gering, so dass in der Regeleinrichtung 8 ein Korrektursignal generiert werden kann, welches dem Signal an die Aktoren hinzugefügt werden kann. Je nach Konfiguration kann aber auch die Berechnung zusätzlicher Transformationen nötig sein. Die Regeleinrichtung 8 steuert so dann die Aktoren an, wobei bei der Ansteuerung auch die Eigenfrequenzschwingungen der gelagerten Masse berücksichtigt sind.

## Patentansprüche

1. Aktives Schwingungsisolationssystem (1), umfassend zumindest eine zu isolierenden Masse, die auf Schwingungsisolatoren gelagert ist,
zumindest einen derart lagernah angeordneten Sensor (3), so dass Positionsänderungen und/oder Schwingungen der zu isolierenden Masse erfassbar sind und Eigenschwingungen der zu isolierenden Masse überwiegend ausgeblendet sind und zumindest einen Aktor (4), um einer Positionsänderung und/oder Schwingung der zu isolierenden Masse entgegenzuwirken,
wobei der zumindest eine Sensor (3) mit einer Regeleinrichtung (8) zur Regelung des zumindest einen Aktors (4) verbunden ist;
**dadurch gekennzeichnet, dass** das Schwingungsisolationssystem (1) zumindest einen weiteren Sensor (7) zur Erfassung von Strukturschwingungen der zu isolierenden Masse, welcher an einer von den Lagern (2) des Schwingungsisolationssystems beabstandeten Stelle mit einem Abstand von zumindest 10 cm angeordnet ist, aufweist, über den Schwingungen, die auf Eigenfrequenzschwingungen der Masse rückschließen lassen, an die Regeleinrichtung (8) weitergegeben werden und wobei über die Regeleinrichtung (8) ein Kompensationssignal zur Reduzierung der Strukturschwingung der zu isolierenden Masse auf das oder die Kompensationssignale der aktiven Schwingungsisolation addierbar ist.

2. Aktives Schwingungsisolationssystem (1) nach dem vorstehenden Anspruch, **dadurch gekennzeichnet, dass** die zu isolierende Masse eine Aufnahme zur Lagerung eines zu isolierenden Gegenstandes (6) umfasst.

3. Aktives Schwingungsisolationssystem (1) nach dem vorstehenden Anspruch, **dadurch gekennzeichnet, dass** über den zumindest einen weiteren Sensor (7) Strukturschwingungen der Aufnahme erfassbar sind.

4. Aktives Schwingungsisolationssystem (1) nach einem der beiden vorstehenden Ansprüche, **dadurch gekennzeichnet, dass** über den zumindest einen Sensor (3) und/oder einen dritten Sensor Strukturschwingungen des zu isolierenden Gegenstandes (6) erfassbar sind.

5. Aktives Schwingungsisolationssystem (1) nach einem der vorstehenden Ansprüche, **dadurch gekennzeichnet, dass** mittels des weiteren Sensors (7) Strukturschwingungen der zu isolierenden Masse in zumindest zwei, vorzugsweise vier und besonders bevorzugt sechs Freiheitsgraden erfassbar sind.

6. Aktives Schwingungsisolationssystem (1) nach einem der vorstehenden Ansprüche, **dadurch gekennzeichnet, dass** der zumindest eine weitere Sensor an einem zu lagernden Gegenstand angeordnet ist.

7. Aktives Schwingungsisolationssystem (1) nach einem der vorstehenden Ansprüche, **dadurch gekennzeichnet, dass** der zumindest eine weitere Sensor (7) von je zwei gegenüberliegenden Lagern (2) des Schwingungsisolationssystems (1) im Wesentlichen gleich weit entfernt ist.

8. Aktives Schwingungsisolationssystem (1) nach einem der vorstehenden Ansprüche, **dadurch gekennzeichnet, dass** das aktive Schwingungsisolationssystem bei einer Anregungsfrequenz von 5 Hz ein Dämpfung von mehr 3 dB, bevorzugt über 5 dB und besonders bevorzugt über 10 dB aufweist.

9. Aktives Schwingungsisolationssystem (1) nach einem der vorstehenden Ansprüche, **dadurch gekennzeichnet, dass** aktive Schwingungsisolationssystem bei einer Anregungsfrequenz von 15 Hz ein Dämpfung von mehr 10 dB, bevorzugt über 20 dB und besonders bevorzugt über 25 dB aufweist.

10. Aktives Schwingungsisolationssystem (1) nach einem der vorstehenden Ansprüche, **dadurch gekennzeichnet, dass** das aktive Schwingungsisolationssystem (1) eine Tragkraft über 1000 N, bevorzugt über 5000 N, besonders bevorzugt über 10000 N hat.

11. Aktives Schwingungsisolationssystem (1) nach einem der vorstehenden Ansprüche, **dadurch gekennzeichnet, dass** der oder die Aktoren (4) berührungslos an der isolierenden Masse angreifen.

12. Aktives Schwingungsisolationssystem (1) nach einem der vorstehenden Ansprüche, **dadurch gekennzeichnet, dass** das Schwingungsisolationssystem zumindest 3 Lager (2), vorzugsweise Luftlager, umfasst.

13. Verfahren zur Schwingungsisolation, vorzugsweise mittels eines aktiven Schwingungsisolationssystems (1) nach einem der vorstehenden Ansprüche, wobei eine zu isolierende Masse auf Schwingungsisolatoren gelagert wird, und zumindest ein Sensor (3) so lagernah angeordnet wird, dass Positionsänderungen und/oder Schwingungen der zu isolierenden Masse erfasst werden und Eigenschwingungen der zu isolierenden Masse überwiegend ausgeblendet werden und über zumindest einen Aktor (4) einer Positionsänderung und/oder Schwingungen der zu isolierenden Masse entgegengewirkt wird,
**dadurch gekennzeichnet, dass**
über zumindest einen weiteren von den Lagern des Schwingungsisolationssystems mit einem Abstand von zumindest 10 cm beabstandeten Sensor (7) Strukturschwingungen der zu isolierenden Masse erfasst und bei der Ansteuerung des Aktors berücksichtigt werden, wobei die Strukturschwingungen Eigenfrequenzschwingungen der zu isolierenden Masse, insbesondere Eigenfrequenzschwingungen eines zu isolierenden Gegenstandes (6) und/oder einer Aufnahme, insbesondere eines Tisches umfassen, und wobei über eine Regeleinrichtung (8) ein Kompensationssignal zur Reduzierung der Strukturschwingung der zu isolierenden Masse auf das oder die Kompensationssignale der aktiven Schwingungsisolation addiert wird.

14. Verfahren zur Schwingungsisolation nach dem vorstehenden Verfahrensanspruch, **dadurch gekennzeichnet, dass** ein zu isolierender Gegenstand auf einer Aufnahme gelagert wird und über den zumindest einen weiteren Sensor (7) Strukturschwingungen der Aufnahme erfasst werden.

15. Verfahren zur Schwingungsisolation nach einem der vorstehenden Verfahrensansprüche, **dadurch gekennzeichnet, dass** über den zumindest einen Sensor (3) und/oder einen dritten Sensor Strukturschwingungen des zu isolierenden Gegenstandes (6) erfasst werden.

16. Verfahren zur Schwingungsisolation nach einem der vorstehenden Verfahrensansprüche, **dadurch gekennzeichnet, dass** das System zur Schwingungsisolation Mittel zur Speicherung von Kennlinien und/der Kennfeldern umfasst, welche verschiedene Anlagenkonfigurationen, insbesondere verschiedene zu isolierende Massen repräsentieren.

17. Plattform zur schwingungsisolierten Lagerung, umfassend ein System zur Schwingungsisolation nach einem der vorstehenden Ansprüche.

## Claims

1. Active vibration isolation system (1), comprising
at least one mass to be isolated which is mounted on vibration isolators,
at least one sensor (3) disposed close to the bearings such that positional changes and/or vibrations of the mass to be isolated can be detected and natural vibrations of the mass to be isolated are predominantly suppressed and
at least one actuator (4) in order to counteract a positional change and/or vibration of the mass to be isolated,
wherein the at least one sensor (3) is connected to a regulating device (8) for regulating the at least one actuator (4);
**characterised in that**
the vibration isolation system (1) has at least one further sensor (7) for detecting structural vibrations of the mass to be isolated, which sensor is disposed at a position, which is spaced apart from the bearings (2) of the vibration isolation system, at a distance of at least 10cm, over which vibrations, which make it possible to draw conclusions about the natural frequency vibrations of the mass, are passed to the regulating device (8) and wherein by means of the regulating device (8) a compensation signal for reducing the structural vibration of the mass to be isolated can be added to the compensation signal(s) of the active vibration isolation.

2. Active vibration isolation system (1) as claimed in the preceding claim, **characterised in that** the mass to be isolated comprises a receiver for mounting an object (6) to be isolated.

3. Active vibration isolation system (1) as claimed in the preceding claim, **characterised in that** structural vibrations of the receiver can be detected via the at least one further sensor (7).

4. Active vibration isolation system (1) as claimed in any one of the two preceding claims, **characterised in that** structural vibrations of the object (6) to be isolated can be detected via the at least one sensor (3) and/or a third sensor.

5. Active vibration isolation system (1) as claimed in any one of the preceding claims, **characterised in that** structural vibrations of the mass to be isolated can be detected by means of the further sensor (7) in at least two, preferably four and particularly preferably six degrees of freedom.

6. Active vibration isolation system (1) as claimed in any one of the preceding claims, **characterised in that** the at least one further sensor is disposed on an object to be mounted.

7. Active vibration isolation system (1) as claimed in any one of the preceding claims, **characterised in that** the at least one further sensor (7) is substantially equidistant from each of two opposing bearings (2) of the vibration isolation system (1).

8. Active vibration isolation system (1) as claimed in any one of the preceding claims, **characterised in that**, at an excitation frequency of 5 Hz, the active vibration isolation system has a damping effect of more than 3 dB, preferably over 5 dB and particularly preferably over 10 dB.

9. Active vibration isolation system (1) as claimed in any one of the preceding claims, **characterised in that**, at an excitation frequency of 15 Hz, the active vibration isolation system has a damping effect of more than 10 dB, preferably over 20 dB and particularly preferably over 25 dB.

10. Active vibration isolation system (1) as claimed in any one of the preceding claims, **characterised in that** the active vibration isolation system (1) has a bearing force over 1000 N, preferably over 5000 N, particularly preferably over 10000 N.

11. Active vibration isolation system (1) as claimed in any one of the preceding claims, **characterised in that** the actuator or actuators (4) engage(s) the isolating mass in a contact-free manner.

12. Active vibration isolation system (1) as claimed in any one of the preceding claims, **characterised in that** the vibration isolation system comprises at least 3 bearings (2), preferably air bearings.

13. Method of vibration isolation, preferably by means of an active vibration isolation system (1) as claimed in any one of the preceding claims, wherein a mass to be isolated is mounted on vibration isolators, and at least one sensor (3) is disposed close to the bearings such that changes in position and/or vibrations of the mass to be isolated are detected and natural vibrations of the mass to be isolated are predominantly suppressed and by means of at least one actuator (4) a positional change and/or vibrations of the mass to be isolated is counteracted,
**characterised in that**
by means of at least one further sensor (7), which is spaced apart from the bearings of the vibration isolation system at a distance of at least 10 cm, structural vibrations of the mass to be isolated are detected and taken into consideration when activating the actuator, wherein the structural vibrations comprise natural frequency vibrations of the mass to be isolated, in particular natural frequency vibrations of an object (6) to be isolated and/or of a receiver, in particular a table, and wherein, by means of a regulating device (8) a compensation signal for reducing the structural vibration of the mass to be isolated is added to the compensation signal(s) of the active vibration isolation.

14. Method of vibration isolation as claimed in the preceding method claim, **characterised in that** an object to be isolated is mounted on a receiver and, via the at least one further sensor (7), structural vibrations of the receiver are detected.

15. Method of vibration isolation as claimed in any one of the preceding method claims, **characterised in that** via the at least one sensor (3) and/or a third sensor, structural vibrations of the object (6) to be isolated are detected.

16. Method of vibration isolation as claimed in any one of the preceding method claims, **characterised in that** the system of vibration isolation comprises means for storing characteristic curves and/or characteristic diagrams which represent different installation configurations, in particular different masses to be isolated.

17. Platform for vibration-isolated mounting, comprising a system of vibration isolation as claimed in any one of the preceding claims.

## Revendications

1. Système actif d'isolation de vibrations (1), comprenant au moins une masse à isoler montée sur des isolateurs de vibrations,
au moins un capteur (3) disposé à proximité du palier de telle sorte que des variations de position et/ou des vibrations de la masse à isoler soient détectables et que des vibrations propres de la masse à isoler soient neutralisées pour l'essentiel, et au moins un actionneur (4) destiné à s'opposer à une variation de position et/ou une vibration de la masse à isoler,
ledit au moins un capteur (3) étant relié à un dispositif de régulation (8) pour la régulation dudit au moins un actionneur (4) ;
ledit système d'isolation de vibrations (1) étant **caractérisé en ce qu'**il comporte au moins un autre capteur (7) pour la détection d'oscillations structurelles de la masse à isoler, lequel est disposé à un emplacement espacé d'une distance d'au moins 10 cm des paliers (2) du système d'isolation de vibrations et au moyen duquel des vibrations renvoyant à des vibrations à fréquences propres de la masse sont transmises au dispositif de régulation (8), et dans lequel un signal compensatoire pour la réduction de l'oscillation structurelle de la masse à isoler peut être ajouté par le dispositif de régulation (8) au signal compensatoire ou aux signaux compensatoires de l'isolation active des vibrations.

2. Système actif d'isolation de vibrations (1) selon la revendication précédente, **caractérisé en ce que** la masse à isoler comprend une réception pour le logement d'un objet à isoler (6).

3. Système actif d'isolation de vibrations (1) selon la revendication précédente, **caractérisé en ce que** des oscillations structurelles de la réception sont détectables par ledit au moins un autre capteur (7).

4. Système actif d'isolation de vibrations (1) selon l'une des deux revendications précédentes, **caractérisé en ce que** des oscillations structurelles de l'objet à isoler (6) sont détectables par ledit au moins un capteur (3) et/ou par un troisième capteur.

5. Système actif d'isolation de vibrations (1) selon l'une des revendications précédentes, **caractérisé en ce que** des oscillations structurelles de la masse à isoler sont détectables par l'autre capteur (7) dans au moins deux, préférentiellement quatre et tout particulièrement six, degrés de liberté.

6. Système actif d'isolation de vibrations (1) selon l'une des revendications précédentes, **caractérisé en ce que** ledit au moins un autre capteur est disposé sur un objet à loger.

7. Système actif d'isolation de vibrations (1) selon l'une des revendications précédentes, **caractérisé en ce que** ledit au moins un autre capteur (7) est disposé sensiblement à la même distance de deux paliers (2) opposés du système d'isolation de vibrations (1).

8. Système actif d'isolation de vibrations (1) selon l'une des revendications précédentes, ledit système actif d'isolation de vibrations étant **caractérisé en ce qu'**il présente un amortissement de plus de 3 dB, préférentiellement supérieur à 5 dB et tout particulièrement supérieur à 10 dB pour une fréquence d'excitation de 5 Hz.

9. Système actif d'isolation de vibrations (1) selon l'une des revendications précédentes, ledit système actif d'isolation de vibrations étant **caractérisé en ce qu'**il présente un amortissement de plus de 10 dB, préférentiellement supérieur à 20 dB et tout particulièrement supérieur à 25 dB pour une fréquence d'excitation de 15 Hz.

10. Système actif d'isolation de vibrations (1) selon l'une des revendications précédentes, ledit système actif d'isolation de vibrations (1) étant **caractérisé en ce qu'**il a une capacité de charge supérieure à 1 000 N, préférentiellement supérieure à 5 000 N, tout particulièrement supérieure à 10 000 N.

11. Système actif d'isolation de vibrations (1) selon l'une des revendications précédentes, **caractérisé en ce que** l'actionneur ou les actionneurs (4) agissent sans contact sur la masse à isoler.

12. Système actif d'isolation de vibrations (1) selon l'une des revendications précédentes, ledit système d'isolation de vibrations étant **caractérisé en ce qu'**il comporte au moins 3 paliers (2), préférentiellement des paliers à air.

13. Procédé d'isolation de vibrations, préférentiellement au moyen d'un système actif d'isolation de vibrations (1) selon l'une des revendications précédentes, dans lequel une masse à isoler est montée sur des isolateurs de vibrations, et dans lequel au moins un capteur (3) est disposé à proximité du palier de telle sorte que des variations de position et/ou des vibrations de la masse à isoler soient détectables et que des vibrations propres de la masse à isoler soient neutralisées pour l'essentiel, et au moins un actionneur (4) s'oppose à une variation de position et/ou une vibration de la masse à isoler,
**caractérisé en ce que** :
des oscillations structurelles de la masse à isoler sont détectées par au moins un autre capteur (7) espacé d'une distance d'au moins 10 cm des paliers du système d'isolation de vibrations et prises en compte pour la commande de l'actionneur, les oscillations structurelles comprenant des vibrations à fréquences propres de la masse à isoler, en particulier des vibrations à fréquences propres d'un objet à isoler (6) et/ou d'une réception, en particulier d'une table, et un signal compensatoire pour la réduction de l'oscillation structurelle de la masse à isoler pouvant être ajouté par un dispositif de régulation (8) au signal compensatoire ou aux signaux compensatoires de l'isolation active des vibrations.

14. Procédé d'isolation de vibrations selon la revendication de procédé précédente, **caractérisé en ce qu'**un objet à isoler est monté sur une réception et des oscillations structurelles de la réception sont détectées par ledit au moins un autre capteur (7).

15. Procédé d'isolation de vibrations selon l'une des revendications de procédé précédentes, **caractérisé en ce que** des oscillations structurelles de l'objet à isoler (6) sont détectées par ledit au moins un capteur (3) et/ou par un troisième capteur.

16. Procédé d'isolation de vibrations selon l'une des revendications de procédé précédentes, **caractérisé en ce que** le système d'isolation des vibrations comprend un moyen de mémorisation de courbes caractéristiques et/ou de diagrammes caractéristiques, représentant différentes configurations d'installation, en particulier différentes masses à isoler.

17. Plate-forme pour montage isolé des vibrations, comprenant un système d'isolation des vibrations selon l'une des revendications précédentes.
